# FASCICULE DE BREVET EUROPEEN

(11) **EP 2 531 462 B1**
(45) Date de publication et mention de la délivrance du brevet: **27.04.2016**
(21) Numéro de dépôt: 11704648.2
(22) Date de dépôt: 17.01.2011
(51) Int. Cl.: C04B 38/10, C04B 28/02, B05D 1/34, B28C 5/38, C04B 24/12, C04B 24/08, E04F 13/02, C04B 103/40

(54) **PROCEDE DE PROJECTION D'UN MATERIAU MOUSSE ET REVETEMENT OBTENU A PARTIR D'UN TEL PROCEDE**
VERFAHREN ZUM SPRÜHEN EINES SCHAUMMATERIALS UND IN EINEM SOLCHEN VERFAHREN HERGESTELLTE BESCHICHTUNG
METHOD FOR SPRAYING FOAM MATERIAL, AND COATING OBTAINED FROM SUCH A METHOD

(30) Priorité: 03.02.2010 FR 1050742
(43) Date de publication de la demande: 12.12.2012
(73) Titulaire: Saint-Gobain Weber, 77170 Servon (FR)
(72) Inventeur: DA SILVA, Claude, F-93600 Aulnay Sous Bois (FR); NORDEN, Geir Ove, N-1555 Son (NO); COMOY, Daniel, F-01400 Condeissiat (FR); FAMY, Charlotte, F-60500 Chantilly (FR)
(74) Mandataire: Teyssedre, Laurent
(86) Numéro de dépôt international: PCT/FR2011/050073
(87) Numéro de publication internationale: WO 2011/095718

(56) Documents cités:
- EP-A2- 2 093 201
- WO-A1-01/70647
- WO-A1-96/25475
- WO-A1-2009/025861
- WO-A2-02/20423
- FR-A1- 2 930 257
- GB-A- 749 002
- US-A- 4 441 944
- MOORFIELD G: "FILLING A GAP IN THE MARKET", CONCRETE, THE CONCRETE SOCIETY, GB, vol. 28, no. 3, 1 mai 1994 (1994-05-01), pages 12-14, XP000444051, ISSN: 0010-5317

## Description

La présente invention concerne un procédé de projection d'un matériau moussé, et un revêtement pour paroi de bâtiment susceptible d'être obtenu après mise en oeuvre d'un tel procédé.

Un tel procédé est principalement destiné à couvrir, notamment en isolant, et rénover les parois extérieures ou intérieures de bâtiments. Il peut également être utilisé pour combler des interstices en surface des matériaux de construction.

Actuellement, en neuf et en rénovation, les professionnels du bâtiment sont à la recherche de matériaux cimentaires allégés et/ou isolants compatibles avec une utilisation en projection, par exemple en façade. Ce type d'application par projection permet de déposer notamment des couches de faible épaisseur (d'au moins un millimètre à quelques centimètres), d'épouser parfaitement la géométrie du support, et permet un gain de temps en diminuant les coûts par rapport aux méthodes traditionnelles (manuelles). Par ailleurs, les matériaux cimentaires (béton, mortier, ciment...) avec allégement de la charge sont particulièrement prisés, étant donné qu'étant moins denses, ils exercent de fait moins de contraintes sur le support sur lequel ils sont appliqués, voire sur l'ensemble de la structure. Conjointement, il est important que le matériau allégé ait des propriétés d'isolation thermique en conformité avec le cahier des charges des ouvrages du bâtiment, voire même que celles-ci soit améliorées, et qu'ils montrent de bonnes propriétés mécaniques en terme de tenue mécanique, de résistance aux chocs dans le temps et de résistance aux divers stress mécaniques.

Les mortiers isolants ou allégés classiques par des additifs usuels (polystyrène expansé (EPS), liège, vermiculite...) présentent l'inconvénient de se densifier lorsqu'ils sont appliqués sur le substrat, en particulier par projection, en raison notamment de la diminution du volume d'air entraîné dans le mortier gâché.

Ceci implique que ces mortiers allégés standards ne présentent pas les propriétés optimales après projection, notamment en terme d'isolation thermique. En particulier, les additifs entraîneurs d'air connus de l'homme du métier ne permettent pas un contrôle satisfaisant de la densité sur mortier projeté.

Pour une application en projection, le mortier en pâte préalablement gâché est soumis à un certain nombre de contraintes qui limitent un tel mode d'application :
- Contrainte de cisaillement lors du mélange.
- Contrainte de cisaillement sous forte pression dans la pompe de la machine de projection (de 1 à 20 bars).
- Contrainte d'écoulement (transport) sous pression dans un tuyau souvent de grande longueur (notamment de 10 à 50 m).

Il est connu également que l'ensemble du procédé d'application par projection a pour effet de densifier la pâte de mortier, ceci étant du à l'évacuation d'une quantité plus ou moins importante d'air contenu initialement dans la pâte. Cette problématique est d'autant plus accentuée dans le cadre de la projection de pâtes de mortier de faibles densités (notamment pour les problématiques d'isolation thermique ou d'allégement), et en particulier dans le cas de l'utilisation d'un mortier incorporant une mousse, dénommé mousse cimentaire.

On connaît de la demande CN101439950, une utilisation d'un béton avec mousse par projection, cependant les densités du matériau projeté obtenu restent très élevées puisqu'ils atteignent au mieux 1.1×10³ kg/m³.

Le document WO01/70647 décrit des mousses des liants hydrauliques préparées en mélangeant une mousse préformée avec un liant hydraulique. Ces mousses sont ensuite mises-en-forme par moulage ou coulage.

La présente invention vise à pallier à tout ou une partie de ces inconvénients, et doit combiner notamment les avantages suivants :
- avoir, avant projection, un matériau moussé qui réponde aux contraintes imposées lors de la projection en terme de propriétés rhéologiques, c'est-à-dire un matériau moussé qui reste stable et suffisamment aéré, tout en s'écoulant facilement, résistant aux cisaillements dans les tuyaux du dispositif de projection ;
- le matériau moussé ne doit pas couler ou glisser de la paroi une fois projeté et il doit pouvoir être travaillé par l'opérateur, c'est-à-dire être étalé, lissé, réparti de façon homogène sur la surface du support - ceci particulièrement pour le dépôt de fortes épaisseurs (idéalement jusqu'à 10 cm) - et doit bien adhérer au support sur lequel il est projeté lors de son durcissement ; et
- on doit pouvoir obtenir après projection, puis séchage, un revêtement en structure allégée bien aéré, avec de bonnes propriétés thermiques, sans fissuration ni retrait en forte épaisseur, tout en gardant une résistance mécanique satisfaisante notamment pour résister aux chocs ou aux écrasements occasionnels.

A cet égard, la présente invention a pour objet un procédé de projection d'un matériau moussé comprenant les étapes suivantes :
a) préparer un matériau moussé en malaxant avec de l'eau dans le mélangeur d'un dispositif de projection au moins les ingrédients suivants :
   i) au moins un liant hydraulique,
   ii) un latex ; et
   iii) une mousse aqueuse
b) transférer ledit matériau moussé dans la pompe dudit dispositif de projection ;
c) projeter sur un support ; et
d) éventuellement, égaliser en épaisseur, dresser et lisser à la règle ledit matériau moussé projeté sur ledit support.

Les inventeurs ont mis en évidence de manière inattendue que, grâce à ce système de matériau moussé, le mélange est suffisamment fluide pour être projeté, en passant notamment dans le circuit de pompage. De plus, le matériau moussé une fois projeté sur une paroi ne coule pas, et cela même lorsqu'on procède au dépôt d'une couche en forte épaisseur (typiquement de 1 jusqu'à 10 cm). La densité du mortier obtenu après séchage reste faible et la pâte projetée peut être ensuite aisément lissée.

Un tel matériau moussé est facilement projetable avec un dispositif de projection traditionnel équipé d'une lance. Le mortier obtenu est également suffisamment aéré pour garantir des propriétés thermiques très satisfaisantes, et il a une bonne tenue mécanique. On obtient, par conséquent, un revêtement très performant compatible avec une utilisation projetée.

« Matériau moussé » dans la cadre de l'invention désigne, par exemple, une mousse cimentaire, c'est à dire un béton moussé, un mortier moussé ou bien une mousse comprenant une pâte de ciment (pâte de ciment moussée).

Pour les mélanges comprenant au moins un liant hydraulique préparés à l'étape a) du procédé selon l'invention : on pourra utiliser, d'une part, indifféremment tout ciment de mélange comme défini dans la norme EN 197, tels que les mélanges de ciment Portland ou les ciments de mélange pouzzolaniques pouvant comprendre seuls ou en combinaison, des cendres volantes, des laitiers de hauts fourneaux, ainsi que des pouzzolanes naturelles ou calcinées, mais également d'autre part, des ciments alumineux ou des ciments sulfoalumineux.

Toutes les combinaisons des ciments précités sont également possibles pour préparer le matériau moussé dans le cadre de la présente invention.

À l'étape a), i) du procédé de projection décrit précédemment on utilisera au moins un liant hydraulique (ciment), avantageusement il s'agira d'un ciment Portland, et de manière d'avantage préférée un ciment Portland CEM I 52.5 (norme EN 197).

De manière préférée, on utilisera uniquement un liant hydraulique (ciment), avantageusement un ciment Portland, et de manière la plus préférée un ciment Portland CEM I 52.5.

Une source de sulfate de calcium pouvant entrer dans la composition du matériau moussé, dans le cadre de l'invention, est par exemple : du gypse, de l'hémihydrate, du phosphogypse et/ou de l'anhydrite.

La chaux utilisée pour préparer le matériau moussé dans le cadre de la présente invention, est par exemple : de la chaux hydraulique, de la chaux vive ou de la chaux éteinte.

« Filler » dans le cadre de la présente invention définit notamment une charge calcaire, une charge siliceuse ou une argile (talc, kaolin etc...). Le filler est de préférence une charge calcaire.

Les charges calcaire ou siliceuse se présentent généralement sous forme de poudre de granulométrie en particulier inférieure ou égale à 120 µm.

Le terme « latex » au sens de la présente invention désigne en particulier les polymères latex utilisés habituellement dans les matériaux de construction. Parmi les polymères pouvant entrer dans cette catégorie on peut citer, par exemple, les latex élastomères, les latex thermoplastiques et les latex thermodurcissables.

De préférence, dans le cadre de la présente invention, on entend par latex, une émulsion ou dispersion aqueuse d'une ou plusieurs substances polymères naturelles ou synthétiques, généralement thermoplastiques. Le ou les polymères peuvent être auto-émulsifiables, ou bien dans le cas contraire, l'émulsion ou la dispersion est stabilisée par des agents tensioactifs appropriés. Un latex utile dans le cadre de la présente l'invention a avantageusement une température de transition vitreuse Tg inférieure à 50°C. Idéalement la Tg doit être comprise entre - 30°C et 50°C, de préférence entre -10°C et 30°C, avantageusement entre 5°C et 25°C, voir être sensiblement de 15°C.

Les propriétés mécaniques du matériau moussé peuvent être ajustées par la combinaison de plusieurs latex, dont l'un au moins a une Tg comprise dans la gamme définie précédemment.

On préfère utiliser des polymères avec une Tg au maximum légèrement inférieure à la température ambiante pour assurer la formation d'un film polymère qui confère les propriétés adéquates du polymère dans le matériau cimentaire durci. On préfère également des polymères ayant des Tg qui ne soient pas trop basses afin que le polymère ne soit pas trop mou, ce qui donnerait un matériau cimentaire trop flexible.

Avantageusement, le latex comprend un polymère ou copolymère de type vinylique, de type acrylique et/ou dérivé d'acide carboxylique. On préfère tout particulièrement les latex de type vinylique, en particulier à fonctions ester pendantes, ou à base de copolymère de chlorure de vinyle et d'oléfine, silanisé ou non. On peut citer notamment des latex à base d'acétate de vinyle, en particulier à base d'homopolymère de polyacétate de vinyle, ou de copolymère d'acétate de vinyle et notamment d'acide et/ou ester (méth)acrylique, d'ester maléïque, d'oléfine et/ou de chlorure de vinyle, ou à base de copolymère chlorure de vinyle/éthylène. D'autres latex intéressants peuvent être choisis parmi ceux renfermant un polymère de type acrylique, notamment un copolymère acrylonitrile/ester acrylique, ou styrène/acide ou ester acrylique silanisé (c'est-à-dire copolymérisé avec un monomère à insaturation éthylénique porteur d'au moins une fonction silane ou silanol).

On utilisera avantageusement les latex commercialisé par la société Hexion®, du type copolymère styrène-acrylique, tel que l' Axilat® 4204 ou tout composant de la gamme Axilat® L ou Axilat® DS, par exemple l' Axilat® DS 805. Cependant, on évitera d'utiliser les produits comprenant des agents anti-mousses.

Le latex pourra également être choisi parmi d'autres copolymères styrène-acrylique, ou un copolymère tout acrylique (issu de différents monomères acrylique) obtenus par polymérisation radicalaire en émulsion ou dispersion. Ces latex sont stabilisés par de l'acide acrylique et/ou de l'acrylonitrile. On trouve également de tels polymères commercialisés par la société BASF dans la gamme référencée par la dénomination Acronal®, en particulier l'Acronal® S 400. On peut également utiliser alternativement ou en combinaison, tout latex (un seul ou plusieurs) de cette gamme Acronal®.

Le terme « mousse aqueuse » au sens de l'invention, définit tout type de mousse obtenu par un empilements désordonné de bulles de gaz dans une phase aqueuse, en particulier dans un liquide d'aspect savonneux. Un tel liquide d'aspect savonneux comprend de l'eau et au moins un composé tensioactif.

De préférence, la mousse aqueuse de l'étape a) du procédé décrit précédemment comprend le mélange des composés suivants :
- au moins un sel de tensioactif cationique sélectionné parmi l'un des composés suivants de formule générale : 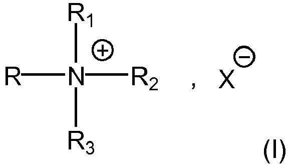 pour laquelle R est une chaîne aliphatique de 8 à 24 atomes de carbones ; R₁ est un groupement sélectionné parmi les alkyles comportant 1 à 16 atomes de carbones, les hydroxyalkyles comportant 1 à 16 atomes de carbones, un groupement benzyle, un groupement qui, pris ensemble avec l'azote de la formule (I), donne un hétérocycle éventuellement substitué par au moins un atome de fluor ; R₂ et R₃ sont sélectionnés parmi les groupements constitués d'un groupement alkyle comportant 1 à 6 atomes de carbones, les hydroxyalkyles comportant 1 à 6 atomes de carbones, un atome d'hydrogène, un groupement benzyle, un groupement qui, pris ensemble avec l'azote de la formule (I), donne un hétérocycle éventuellement substitué par au moins atome de fluor ; et X⁻ est un contre anion ;
- au moins un sel de tensioactif anionique sélectionné parmi l'un des composés suivants de formule générale (II) :

   R-X⁻, Y⁺ (II)

   pour lequel R est une chaîne aliphatique de 10 à 24 atomes de carbones ; X⁻ est un groupement portant une charge négative sélectionné parmi les groupement carboxylate, sulfates et phosphate ; et Y⁺ est un contre cation sélectionné parmi les groupements ammonium, sodium, potassium, calcium et magnésium ;
   tel que le rapport de la teneur pondérale du sel de tensioactif cationique sur la teneur pondérale du sel de tensioactif anionique varie de 0.05 :1 à 15 :1, de préférence de 0.2 :1 à 5 :1, voire même de 0.4 :1 à 2.5 :1.

Dans le cadre de l'invention, « sel de tensioactif ionique » définit un tensioactif pris ensemble avec le contre ion qui lui est associé.

Avantageusement, le sel de tensioactif cationique de la mousse aqueuse utilisée à l'étape a) du procédé de l'invention est sélectionné parmi les sels d'alkyltriméthyle ammonium contenant un groupement alkyle comportant 10 à 22 atomes de carbone, et est sélectionné de préférence parmi au moins l'un des composé suivants : le bromure (ou chlorure) de dodécyltriméthylammonium, le bromure (ou chlorure) de tetradecyltriméthylammonium, le bromure (ou chlorure) d'hexadecyltriméthylammonium, le bromure (ou chlorure) d'octadécyltriméthylammonium, le bromure (ou chlorure) de cétyltriméthylammonium, le chlorure de cétylbenzyldimethylammonium, le bromure de cétyltriéthylammonium et le chlorure de tallowtriméthylammonium. De manière d'avantage préférée, le sel de tensioactif cationique est le chlorure de tallowtriméthylammonium.

De manière avantageuse, le(s) sel(s) de tensioactif(s) anionique(s) cité(s) précédemment est(sont) sélectionné(s) parmi au moins l'un des composés suivant : le stéarate d'ammonium, le stéarate de potassium, le stéarate de sodium, le stéarate de calcium et le stéarate de magnésium.

On peut également utiliser de manière alternative ou complémentaire des tensioactifs anioniques constitués d'un sel de métal alcalin d'un acide organique portant une chaîne aliphatique comportant 12 à 24 atomes de carbones, avantageusement un sel de sodium, de potassium ou d'ammonium (éventuellement substitué).

Le groupement X⁻ de la formule générale (II) peut être un groupement carboxylate, sulfate ou sulfonate. On peut citer des sels de carboxylates comportant 12 à 24 atomes de carbone, sélectionnés par exemple parmi les sels : de myristate, de palmitate, de stéarate, d'oléate, ou de la base conjuguée de l'acide béhénique ; et en particulier les anions sélectionnés dérivés du savon par hydrolyse de triglycéride (saponification). On peut citer également d'autres carboxylates tels que ceux issus du traitement des acides gras du suif, comprenant notamment du palmitate, du stéarate et de l'oléate. D'autres bases conjuguées d'acides gras peuvent également être utilisée comme par exemple les savons/gels douche comprenant des acides gras issus de sources naturelles telles que le suif, l'huile de coco ou bien encore l'huile de palme.

De préférence, les tensioactifs cationiques et anioniques, de la mousse aqueuse utilisée à l'étape a) du procédé objet de la présente invention, sont compris dans deux phases aqueuses distinctes et sont mélangés dans les teneurs indiqués précédemment pour former la mousse. La préparation d'une telle mousse aqueuse est décrite dans la demande WO96/25475.

Les inventeurs ont montré que ces mousses aqueuses comprenant un tensioactif cationique et un tensioactif cationique ont l'avantage de rester particulièrement stable lors de la projection, et même après, en particulier pendant le séchage et/ou le durcissement.

De préférence, les tensioactifs cationiques et anioniques, de la mousse aqueuse utilisée à l'étape a) du procédé objet de la présente invention, sont compris dans une seule et même phase aqueuse qui est agitée vigoureusement pour provoquer le moussage.

On peut également prévoir d'ajouter d'autres ingrédients à l'étape a) du procédé selon l'invention : par exemple des additifs ou adjuvants conférant des propriétés particulières, par exemple des agents rhéologiques, des agents rétenteurs d'eau, des agents entraîneurs d'air, des fibres à fonctionnalité rhéologique et/ou mécanique, des agents épaississants, des agents de protection biocides et/ou fongicides, des agents hydrofugeants, des agents dispersants, des agents débullants, des pigments (en particulier minéraux), des accélérateurs, des retardateurs, des agents pour améliorer la prise et/ou le durcissement, ainsi que la stabilité du mortier après application. On peut aussi utiliser des agents jouant sur la couleur et/ou la mise en oeuvre du mortier...

Toutes les combinaisons des ingrédients précités en ajout dans le mélange à l'étape a) du procédé selon l'invention sont également possibles.

De préférence, on ajoute à l'étape a) du procédé selon l'invention du sable : ajouter du sable permet de préparer des mortiers moussés, en particulier lorsque le liant est un liant hydraulique.

De préférence, on ajoute en outre avec le sable, à l'étape a) du procédé selon l'invention, des granulats (ou des agrégats) : ajouter du sable et des granulats permet de préparer des bétons moussés, en particulier lorsque le liant est un liant hydraulique.

Les sables utilisés dans le cadre de l'invention présentent de préférence une granulométrie variant de 50µm à 4mm, et avantageusement de 50µm à 500µm.

Le matériau moussé obtenu à l'étape a) est de préférence transféré dans la pompe du dispositif à projection, et une pression de 1 à 20 bars, de préférence 1 à 5 bars, ou avantageusement 2 bars, est appliquée au mélange.

Le dispositif de projection utilisé dans le cadre de l'invention est de manière préférée un appareil commercialisé par la société Putzmeister de type P11 ou S5. Il possède une lance (ou tuyau) de projection de préférence d'une longueur idéalement comprise entre 10 à 50 m, par exemple 12 m, pour une section d'un diamètre de préférence variant de 20 à 40 mm, par exemple 25 mm.

Le matériau moussé pourra également contenir en outre des constituants allégeant utilisés à des fins de diminution de la densité du matériau une fois projeté.

Le terme « constituant allégeant » au sens de l'invention, définit n'importe quelle inclusion permettant de diminuer la densité du mortier, et peut se présenter sous forme solide, liquide ou d'un gaz. Avantageusement, il s'agira d'un constituant allégeant sous forme solide.

De préférence, le constituant allégeant dans la composition de matériau moussé comprend au moins de la roche volcanique (rhyolite) expansée, multicellulaire. Un tel constituant allégeant peut comporter en outre un traitement de surface hydrophobe, typiquement la Noblite® G200 EC commercialisé par la société Lafarge Prestia, ou être sans aucun traitement de surface hydrophobe, par exemple la Perlite® 0/1 commercialisé par la société Knauf Insulation.

De préférence, le constituant allégeant dans le cadre de la présente invention comprend au moins des billes de polystyrène expansé (PSE), telles que celles commercialisés par la société Saint-Gobain Placoplâtre.

De préférence, le constituant allégeant du mortier allégé renforcé se présente au moins sous forme d'additifs isolants thermiquement, étanches à l'eau, sensiblement en forme de billes, et tel que les additifs isolants thermiquement comprennent au moins des microsphères isolantes unicellulaires. Les microsphères isolantes utilisées sont avantageusement les microsphères de verre de la société 3M (microsphère de verre de borosilicate creuses, unicellulaires, à coque continue (non poreuse)), et/ou les microsphères de polymère creuse, unicellulaires, à coque continue, contenant des thermoplastiques (mélange PVC et acrylonitrile) commercialisés sous la référence Expancel® 551 DE 40 d42.

Toutes les combinaisons des constituants allégeant précités sont également possibles dans le mélange à base de la mousse cimentaire de l'invention.

La présente invention a aussi pour objet un revêtement, en particulier pour façade et/ou pour paroi intérieure, susceptible d'être obtenu par le procédé de projection tel que défini précédemment dans le cadre de l'invention. Le revêtement obtenu correspond au matériau moussé projeté, séché et durci sur son support (mur, façade, ou autres parois).

Les revêtements obtenus dans ce cadre après séchage et durcissement ont démontré d'excellentes performances thermiques, puisque typiquement la conductivité thermique du revêtement obtenu selon l'invention est inférieure ou égale à 250 mW/m.K, et est avantageusement inférieure ou égale à 200 mW/m.K ; de manière particulièrement préférée elle est inférieure ou égale à 170 mW/m.K, voire même inférieure ou égale à 150 mW/m.K.

La conductivité thermique des revêtements obtenus dans le cadre de l'invention est avantageusement inférieure ou égale à 110 mW/m.K, de préférence elle est inférieure ou égale à 90 mW/m.K ; de manière d'avantage préférée elle est inférieure ou égale à 75 mW/m.K, et elle est avantageusement inférieure ou égale à 55 mW/m.K, voire inférieure ou égale 45 mW/m.K, et même inférieure ou égale 35 mW/m.K.

La masse volumique du revêtement cimentaire obtenu selon l'invention après séchage et durcissement est inférieure ou égale à 800 kg/m³, avantageusement elle est inférieure ou égale à 400 kg/m³, et de manière d'avantage préférée elle est inférieure ou égale à 200 kg/m³.

De manière plus préférée, la masse volumique du matériau isolant selon l'invention est inférieure ou égale à 190 kg/m³, avantageusement elle est inférieur ou égale à 170 kg/m3, voire même inférieur ou égale à 150 kg/m³.

Toutes les combinaisons des plages de valeurs de conductivité thermique et des gammes de masse volumique définies précédemment sont également possibles.

La présente invention et ses avantages seront mieux compris à la lecture des exemples qui suivent, uniquement donnés à titre illustratif et qui ne peuvent en aucun cas être considérés comme limitatifs:

### EXEMPLES :

### Compositions et préparation des mousses aqueuses utilisées pour la fabrication de pâtes de ciment moussées (échantillons 1 et 2 du tableau 1) :

Les quantités sont données en % pondéraux exprimés soit par rapport à la masse totale de chaque composant (mousse 1), soit par rapport à la masse totale de la mousse (mousse 2).

### Mousse 1 : (mousse commercialisée par la société Allied Foam)

Composant 1 de référence commerciale 425A :
- Mélange de tensioactif cationique appartenant à la classe des alkyls à longues chaîne : 50-60%
- Mélange de tensioactif cationique phénoxyle non ionique : 10-20%
- Ethanol : 5-8%
- Eau : 12-35%

Composant 2 de référence commerciale 510B :
- Mélange de polymères acrylique : 25-35%
- Mélange de tensioactif anionique appartenant à la classe des acides gras :
   15-30%
- Eau : 35-65%

La mousse est générée par un générateur de mousse commercialisé par la société Allied Foam.

Le composant 1 est dilué à 136 g pour 1 L d'eau.

Le composant 2 introduit directement dans le réservoir prévu à cet effet.

### Mousse 2 :

La composition de la mousse est la suivante :
- 100g d'eau
- 3.3g d'Arquad® T50 (49% de propylène glycol, 51 % de chlorure de tallowtriméthylammonium (64% d'alkyl en C18, 31% d'alkyl en C16, 4% d'alkyl en C14 et 1% d'alkyl en C12) en solution dans le propylène glycol).
- 0.67g de Triton® X-405 (70% d'éthoxylate de d'octylphénol).
- 20g d'une solution à 5.3% de stéarate de potassium.
- 30g de latex Axilat® DS805 (57% de copolymère styrène acrylique en suspension dans l'eau).

Les produits de la gamme Arquad® sont commercialisés par la société Akzo Nobel, ceux référencés sous la dénomination Triton® : par la société Dow Chemical, et ceux référencé sous la dénomination Axilat® : par la société Hexion.

La mousse est générée à partir d'un mélange de l'ensemble de ces composants en une étape à partir d'un générateur de mousse classique à une pression d'air de 8 bars.

### Composition cimentaire utilisée pour la fabrication des pâtes de ciment moussées (échantillons 1 et 2 du tableau 1) :

Les poudres cimentaires utilisées pour la préparation des échantillons 1 et 2 ont la composition suivante : 85% ciment Portland CEM I52,5 + 14,5% chaux + 0.5% additifs rétenteurs d'eau et d'hydrofugeants.

### Fabrication des deux échantillons décrits dans le tableau 1

Les tests de projection sont réalisés par l'utilisation d'une machine de projection de la société Putzmeister de type S5.
Dans un premier temps, on incorpore l'eau à la poudre cimentaire. Le mélange pour gâchage dure 30 secondes. Concernant l'échantillon 1, on ajoute le latex pendant le gâchage (pour l'échantillon 2, le latex est déjà présent dans la composition de la mousse 2).

La mousse, produite par ailleurs comme expliqué ci-dessus, est ensuite introduite dans le mélangeur dans les proportions décrites dans le tableau 1, la durée du mélange de la pâte cimentaire et de la mousse est d'environ 1 minute et 30 secondes.
Il en résulte alors une pâte de ciment moussée homogène.

La pâte de ciment moussée est ensuite transférée dans la pompe de la machine de projection, pour projection sur mur vertical en réglant la pression sur 2 bars (celle-ci peut varier de 1 à 20 bars), la pâte de ciment moussée s'écoule dans un tuyau de 12 m de longueur (possibilité d'avoir une longueur jusqu'à 25 m), et de 25 mm de diamètre (on peut également utiliser un tuyau d'un diamètre inférieur ou égal 1 cm).

Le support utilisé pour la projection est un mur constitué de briques revêtues d'un enduit lisse de mortier, simulant ainsi l'enduction d'une façade déjà enduite.
La pâte de ciment moussée est projetée sur ce mur à l'aide d'un pistolet avec buse de 15 mm de diamètre intérieur en sortie : on procède sur le mur à une projection de pâte de ciment moussée en forte épaisseur, typiquement de 4 cm.
La pâte de ciment moussée est ensuite lissée sur le mur à la règle pour avoir une épaisseur homogène.

### Protocoles de mesure :

### La densité de la pâte de ciment moussée fraîche :

Elle est déterminée par mesure de la masse de la pâte de ciment moussée dans un récipient métallique d' 1 litre (protocole classique mortier). L'écart-type de la mesure est d'environ 3%.
- Mesure sur la mousse cimentaire avant projection : celle-ci est prélevée après étape de mélange, juste avant transfert dans la pompe pour projection effective.
- Mesure sur la mousse cimentaire après projection : celle-ci est prélevée à la truelle sur le mur directement après la projection.

### La densité de la pâte de ciment moussée durcie (revêtement pour façade) :

28 jours après projection la densité est mesurée après avoir découpé du mur un échantillon de 20x20x3cm du revêtement cimentaire.

La densité est déterminée par le rapport de la masse de l'échantillon par son volume.

La précision de cette mesure est estimée à 3%.

### La mesure de la conductivité thermique :

28 jours après projection la conductivité thermique est déterminée à l'aide d'un conductimètre Netzsch HFM 436/3/1 selon la norme EN NF 12664, à partir des échantillons utilisés pour la mesure de densité (voir ci-dessus). La précision de la mesure est estimée à 3%.

Les résultats obtenus sont résumés dans le tableau 1 qui suit.

**Tableau 1 (*)**

| | Echantillon 1 | Echantillon 2 |
|---|---|---|
| **Mousse (avec ou sans latex)** | Mousse 1 - **34,2%** | Mousse **2** - **22,7%** |
| **Composition cimentaire** | **27,4%** | **45,5%** |
| **Latex** | Axilat DS805 - **9,6%** | |
| **Microsphères de verre K1 de la société 3M** | **8,20%** | |
| **eau** | **20,50%** | **31,80%** |
| **Densité de la pâte de ciment moussée fraîche avant projection** | 183 g/L | 217g/L |
| **Densité de la pâte de ciment moussée fraîche directement après projection (sur mur)** | 212g/L | 239g/L |
| **Comportement de la pâte de ciment moussée sur mur** | Satisfaisant. Bon maintien, ne glisse pas pour une épaisseur de 4 cm et est facile à lisser. | Satisfaisant. Bon maintien, ne glisse pas pour une épaisseur de 4 cm et est facile à lisser. |
| **Densité de la pâte de ciment moussée durcie (28 jours après projection)** | 161 g/L | 187 g/L |
| **Conductivité thermique de la pâte de ciment moussée durcie (28 jours après projection)** | 43 mW/m.K | 51 mW/m.K |

| | | |
|---|---|---|
| (*) Les quantités sont exprimées en % pondéraux par rapport à la masse totale de la pâte de ciment moussée. | | |

## Revendications

1. Procédé de projection d'un matériau moussé comprenant les étapes suivantes :
a) préparer un matériau moussé en malaxant avec de l'eau dans le mélangeur d'un dispositif de projection au moins les ingrédients suivants :
i) au moins un liant hydraulique,
ii) un latex ; et
iii) une mousse aqueuse
b) transférer ledit matériau moussé dans la pompe dudit dispositif de projection ;
c) projeter sur un support ; et
d) éventuellement, égaliser en épaisseur, dresser et lisser à la règle ledit matériau moussé projeté sur ledit support.

2. Procédé selon la revendication 1, **caractérisé en ce que** à l'étape a) on utilise un ciment Portland, voire même un ciment Portland CEM I 52.5.

3. Procédé selon l'une des revendications 1 ou 2 **caractérisé en ce que** à l'étape a), on utilise en outre une source de sulfate de calcium, de la chaux et/ou un filler.

4. Procédé selon l'une des revendications 1 à 3, **caractérisé en ce que** le latex utilisé à l'étape a) comprend au moins l'un des éléments sélectionné parmi un polymère vinylique, un polymère acrylique, un polymère comportant des fonctions dérivées d'acide carboxylique, un copolymère vinylique, un copolymère acrylique et un copolymère comportant des fonctions dérivées d'acide carboxylique.

5. Procédé selon l'une quelconque des revendications précédentes, **caractérisé en ce que** ledit latex comprend un copolymère styrène-acrylique.

6. Procédé selon l'une quelconque des revendications précédentes, **caractérisé en ce que** ladite mousse aqueuse comprend le mélange des composés suivants :
- au moins un sel de tensioactif cationique sélectionné parmi l'un des composés suivants de formule générale : 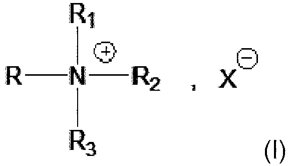 pour laquelle R est une chaîne aliphatique de 8 à 24 atomes de carbones ; R₁ est un groupement sélectionné parmi les alkyles comportant 1 à 16 atomes de carbones, les hydroxyalkyles comportant 1 à 16 atomes de carbones, un groupement benzyle, un groupement qui, pris ensemble avec l'azote de la formule (I), donne un hétérocycle éventuellement substitué par au moins un atome de fluor ; R₂ et R₃ sont sélectionnés parmi les groupements constitués d'un groupement alkyle comportant 1 à 6 atomes de carbones, les hydroxyalkyles comportant 1 à 6 atomes de carbones, un atome d'hydrogène, un groupement benzyle, un groupement qui, pris ensemble avec l'azote de la formule (I), donne un hétérocycle éventuellement substitué par au moins atome de fluor ; et X- est un contre anion ;
- au moins un sel de tensioactif anionique sélectionné parmi l'un des composés suivants de formule générale (II) :
R-X⁻, Y⁺ (II)
pour lequel R est une chaîne aliphatique de 10 à 24 atomes de carbones ; X⁻ est un groupement portant une charge négative sélectionné parmi les groupement carboxylate, sulfates et phosphate ; et Y⁺ est un contre cation sélectionné parmi les groupements ammonium, sodium, potassium, calcium et magnésium ;
tel que le rapport de la teneur pondérale du sel de tensioactif cationique sur la teneur pondérale du sel de tensioactif anionique varie de 0.05 :1 à 15 :1, de préférence de 0.2 :1 à 5 :1, voire même de 0.4 :1 à 2.5 :1.

7. Procédé selon la revendication 6, **caractérisé en ce que** le sel de tensioactif cationique est sélectionné parmi au moins l'un des éléments suivants : le bromure de dodécyltriméthylammonium, le chlorure le de dodécyltriméthylammonium, le bromure de tetradecyltriméthylammonium, le chlorure de tetradecyltriméthylammonium, le bromure d'hexadecyltriméthylammonium, le chlorure d'hexadecyltriméthylammonium, le bromure d'octadécyltriméthylammonium, le chlorure d'octadécyltriméthylammonium, le bromure de cétyltriméthylammonium, le chlorure de cétyltriméthylammonium, le chlorure de cétylbenzyldimethylammonium, le bromure de cétyltriéthylammonium et le chlorure de tallowtriméthylammonium.

8. Procédé selon l'une quelconque des revendications 6 ou 7, **caractérisé en ce que** le sel de tensioactif cationique est le chlorure de tallowtriméthylammonium.

9. Procédé selon l'une quelconque des revendications 6 à 8, **caractérisé en ce que** le sel de tensioactif anionique est sélectionné parmi au moins l'un des composés suivants : le stéarate d'ammonium, le stéarate de potassium, le stéarate de sodium, le stéarate de calcium et le stéarate de magnésium.

10. Procédé selon l'une quelconque des revendications précédentes, **caractérisé en ce que** à l'étape a) du procédé, on ajoute en outre du sable.

11. Procédé selon la revendication 10, **caractérisé en ce que** à l'étape a) du procédé, on ajoute en outre des granulats.

12. Revêtement pour façade ou paroi intérieure susceptible d'être obtenu par le procédé de projection selon l'une des revendications 1 à 11.

13. Revêtement selon la revendication 12, **caractérisé en ce qu'**il a une conductivité thermique inférieure ou égale à 250 mW/m.K.

14. Revêtement selon l'une quelconque des revendications 12 ou 13, **caractérisé en ce qu'**il a une conductivité thermique inférieure ou égale à 110 mW/m.K.

15. Revêtement selon l'une quelconque des revendications 12 à 14, **caractérisé en ce qu'**il a une conductivité thermique inférieure ou égale à 55 mW/m.K.

16. Revêtement selon l'une quelconque des revendications 12 à 15, **caractérisé en ce qu'**il a une conductivité thermique inférieure ou égale à 45 mW/m.K.

## Patentansprüche

1. Verfahren zum Aufsprühen eines Schaummaterials, umfassend die folgenden Schritte:
a) Herstellen eines Schaummaterials, indem mit Wasser in einem Mischer einer Aufsprühvorrichtung mindestens die folgenden Inhaltsstoffe verrührt werden:
i) mindestens ein hydraulisches Bindemittel,
ii) ein Latex; und
iii) ein wässriger Schaum
b) Verbringen des Schaummaterials in die Pumpe der Aufsprühvorrichtung;
c) Aufsprühen auf einen Träger; und
d) gegebenenfalls Ausgleichen in der Dicke, Glätten und Abstreichen des auf den Träger aufgesprühten Schaummaterials.

2. Verfahren nach Anspruch 1, **dadurch gekennzeichnet, dass** in Schritt a) ein Portland-Zement oder sogar ein Portland-Zement CEM I 52.5 verwendet wird.

3. Verfahren nach einem der Ansprüche 1 oder 2, **dadurch gekennzeichnet, dass** in Schritt a) ferner eine Calciumsulfatquelle, Kalk und/oder ein Füllmaterial verwendet wird.

4. Verfahren nach einem der Ansprüche 1 bis 3, **dadurch gekennzeichnet, dass** der in Schritt a) verwendete Latex mindestens eines der Elemente enthält, die gewählt sind aus einem Vinylpolymer, einem Acrylpolymer, einem Polymer, das Carbonsäurederivatfunktionen aufweist, einem Vinyl-Copolymer, einem Acryl-Copolymer und einem Copolymer, das Carbonsäurederivatfunktionen aufweist.

5. Verfahren nach einem der vorhergehenden Ansprüche, **dadurch gekennzeichnet, dass** der Latex ein Styrol-Acrylat-Copolymer enthält.

6. Verfahren nach einem der vorhergehenden Ansprüche, **dadurch gekennzeichnet, dass** der wässrige Schaum das Gemisch der folgenden Verbindungen enthält:
- mindestens ein kationisches Tensidsalz, das gewählt ist aus einer der folgenden Verbindungen der allgemeinen Formel: 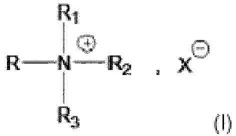 wobei R eine aliphatische Kette mit 8 bis 24 Kohlenstoffatomen ist; R₁ eine Gruppierung ist, die gewählt ist aus den Alkylen mit 1 bis 16 Kohlenstoffatomen, den Hydroxyalkylen mit 1 bis 16 Kohlenstoffatomen, einer Benzylgruppierung, einer Gruppierung, die zusammen mit dem Stickstoff der Formel (I) einen Heterozyklus ergibt, der gegebenenfalls durch mindestens ein Fluoratom substituiert wird; R₂ und R₃ gewählt sind aus den Gruppierungen, die bestehen aus einer Alkylgruppierung mit 1 bis 6 Kohlenstoffatomen, den Hydroxyalkylen mit 1 bis 6 Kohlenstoffatomen, einem Wasserstoffatom, einer Benzylgruppierung, einer Gruppierung, die zusammen mit dem Stickstoff der Formel (I) einen Heterozyklus ergibt, der gegebenenfalls durch mindestens ein Fluoratom substituiert wird; und X⁻ ein Gegenanion ist;
- mindestens ein anionisches Tensidsalz, das gewählt ist aus einer der folgenden Verbindungen der allgemeinen Formel (II):
R-X⁻, Y⁺ (II)
wobei R eine aliphatische Kette mit 10 bis 24 Kohlenstoffatomen ist; X⁻ eine Gruppierung ist, die eine negative Ladung trägt und gewählt ist aus den Carboxylat-, Sulfat- und Phosphat-Gruppierungen; und Y⁺ ein Gegenkation ist, das gewählt ist aus den Ammonium-, Natrium-, Kalium, Calcium- und Magnesium-Gruppierungen;
dergestalt, dass das Verhältnis des Gewichtsanteils des kationischen Tensidsalzes zu dem Gewichtsanteil des anionischen Tensidsalzes von 0,05:1 bis 15:1, vorzugsweise von 0,2:1 bis 5:1 oder sogar von 0,4:1 bis 2,5:1 variiert.

7. Verfahren nach Anspruch 6, **dadurch gekennzeichnet, dass** das kationische Tensidsalz gewählt ist aus mindestens einem der folgenden Elemente:
Dodecyltrimethylammoniumbromid, Dodecyltrimethylammoniumchlorid, Tetradecyltrimethylammoniumbromid, Tetradecyltrimethylammoniumchlorid, Hexadecyltrimethylammoniumbromid, Hexadecyltrimethylammoniumchlorid, Octadecyltrimethylammoniumbromid, Octadecyltrimethylammoniumchlorid, Cetyltrimethylammoniumbromid, Cetyltrimethylammoniumchlorid, Cetylbenzyldimethylammoniumbromid, Cetyltriethylammoniumbromid und Tallowtrimethylammoniumchlorid.

8. Verfahren nach einem der Ansprüche 6 oder 7, **dadurch gekennzeichnet, dass** das kationische Tensidsalz Tallowtrimethylammoniumchlorid ist.

9. Verfahren nach einem der Ansprüche 6 bis 8, **dadurch gekennzeichnet, dass** das anionische Tensidsalz gewählt ist aus mindestens einer der folgenden Verbindungen: Ammoniumstearat, Kaliumstearat, Natriumstearat, Calciumstearat und Magnesiumstearat.

10. Verfahren nach einem der vorhergehenden Ansprüche, **dadurch gekennzeichnet, dass** in Schritt a) des Verfahrens ferner Sand zugegeben wird.

11. Verfahren nach Anspruch 10, **dadurch gekennzeichnet, dass** in Schritt a) des Verfahrens ferner Granulate zugegeben werden.

12. Verblendung für Fassade oder Innenwand, die durch das Aufsprühverfahren nach einem der Ansprüche 1 bis 11 hergestellt werden kann.

13. Verblendung nach Anspruch 12, **dadurch gekennzeichnet, dass** sie eine Wärmeleitfähigkeit kleiner oder gleich 250 mW/m.K hat.

14. Verblendung nach einem der Ansprüche 12 oder 13, **dadurch gekennzeichnet, dass** sie eine Wärmeleitfähigkeit kleiner oder gleich 110 mW/m.K hat.

15. Verblendung nach einem der Ansprüche 12 bis 14, **dadurch gekennzeichnet, dass** sie eine Wärmeleitfähigkeit kleiner oder gleich 55 mW/m.K hat.

16. Verblendung nach einem der Ansprüche 12 bis 15, **dadurch gekennzeichnet, dass** sie eine Wärmeleitfähigkeit kleiner oder gleich 45 mW/m.K hat.

## Claims

1. Process for spraying a foamed material, comprising the following stages:
a) preparing a foamed material by mixing with water, in the mixer of a spraying device, at least the following ingredients:
i) at least a hydraulic binder;
ii) a latex; and
iii) an aqueous foam;
b) transferring the said foamed material into the pump of the said spraying device;
c) spraying over a support; and
d) optionally making uniform in thickness, levelling and smoothing with a straightedge the said foamed material sprayed over the said support.

2. Process according to Claim 1, **characterized in that**, in stage a), use is made of a Portland cement, indeed even a Portland CEM I 52.5 cement.

3. process according to one of the claims 1 or 2, **characterized in that**, in stage a), use is made in addition of a calcium sulphate source, lime and/or a filler.

4. Process according to one of the claims 1 to 3, **characterized in that** the latex used in stage a) comprises at least one of the components selected from a vinyl polymer, an acrylic polymer, a polymer comprising functional groups derived from carboxylic acid, a vinyl copolymer, an acrylic copolymer and a copolymer comprising functional groups derived from carboxylic acid.

5. Process according to any one of claims 1 to 3, **characterized in that** the said latex comprises a styrene/acrylic copolymer.

6. Process according to any one of the preceding claims, **characterized in that** the said aqueous foam comprises the mixture of the following compounds:
- at least one cationic surfactant salt selected from one of the following compounds of general formula: 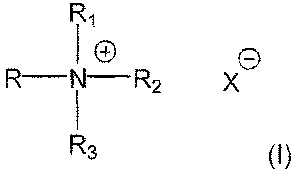 for which R is an aliphatic chain of 8 to 24 carbon atoms, R₁ is a group selected from alkyls comprising from 1 to 16 carbon atoms, hydroxyalkyls comprising from 1 to 16 carbon atoms, a benzyl group or a group which, taken together with the nitrogen of the formula (I), gives a heterocycle optionally substituted by at least one fluorine atom, R₂ and R₃ are selected from groups composed of an alkyl group comprising from 1 to 6 carbon atoms, hydroxyalkyls comprising from 1 to 6 carbon atoms, a hydrogen atom, a benzyl group or a group which, taken together with the nitrogen of the formula (I), gives a heterocycle optionally substituted by at least one fluorine atom, and X⁻ is a counteranion;
- at least one anionic surfactant salt selected from one of the following compounds of general formula (II):
**R-X⁻ Y⁺** **(II)**
for which R is an aliphatic chain of 10 to 24 carbon atoms, X⁻ is a group carrying a negative charge selected from carboxylate, sulphate and phosphate groups, and Y⁺ is a countercation selected from ammonium, sodium, potassium, calcium and magnesium groups;
such that the ratio of the content by weight of the cationic surfactant salt to the content by weight of the anionic surfactant salt varies from 0.05:1 to 15:1, preferably from 0.2:1 to 5:1, indeed even from 0.4:1 to 2.5:1.

7. Process according to Claim 6, **characterized in that** the cationic surfactant salt is selected from at least one of the following components: dodecyltrimethylammonium bromide, dodecyltrimethylammonium chloride, tetradecyltrimethylammonium bromide, tetradecyltrimethylammonium chloride, hexadecyltrimethylammonium bromide, hexadecyltrimethylammonium chloride, octadecyltrimethylammonium bromide, octadecyltrimethylammonium chloride, cetyltrimethylammonium bromide, cetyltrimethylammonium chloride, cetylbenzyldimethylammonium chloride, cetyltriethylammonium bromide and tallowtrimethylammonium chloride.

8. Process according to either one of Claims 6 and 7, **characterized in that** the cationic surfactant salt is tallowtrimethylammonium chloride.

9. Process according to any one of the claims 6 to 8, **characterized in that** the anionic surfactant salt is selected from at least one of the following compounds:
ammonium stearate, potassium stearate, sodium stearate, calcium stearate and magnesium stearate.

10. Process according to any one of the preceding claims, **characterized in that**, in stage a) of the process, sand is additionally added.

11. Process according to Claim 10, **characterized in that**, in stage a) of the process, aggregates are additionally added.

12. Coating for a facade or an interior wall capable of being obtained by the spraying process according to one of Claims 1 to 11.

13. Coating according to Claim 12, **characterized in that** it has a thermal conductivity of less than or equal to 250 mW/m.K.

14. Coating according to either one of Claims 12 and 13, **characterized in that** it has a thermal conductivity of less than or equal to 110 mW/m.K.

15. Coating according to any one of Claims 12 to 14, **characterized in that** it has a thermal conductivity of less than or equal 55 mW/m.K.

16. Coating according to any one of Claims 12 to 15, **characterized in that** it has a thermal conductivity of less than or equal to 45 mW/m.K.
